# EUROPEAN PATENT SPECIFICATION

(11) **EP 3 093 541 B1**
(45) Date of publication and mention of the grant of the patent: **23.01.2019**
(21) Application number: 16169602.6
(22) Date of filing: 13.05.2016
(51) Int. Cl.: F16L 3/04, H02G 3/32, F16L 3/13, F16L 3/223, F16L 3/237, F16L 3/22

(54) **FIXING DEVICE**
FIXIERVORRICHTUNG
DISPOSITIF DE FIXATION

(30) Priority: 13.05.2015 DK 201500289
(43) Date of publication of application: 16.11.2016
(73) Proprietor: Clips Group Holding IVS, 8200 Aarhus N (DK)
(72) Inventor: MOGENSEN, Henrik, 8960 Randers SØ (DK)
(74) Representative: Patentgruppen A/S

(56) References cited:
- EP-B1- 0 937 929
- DE-A1-102006 008 446
- FR-A1- 2 832 484
- GB-A- 1 249 950
- US-A1- 2004 115 004

## Description

### Field of the invention

The present invention generally relates to a fixing device for fixing pipes, tubes and cables. More particularly, the present invention generally relates to a fixing device for fixing a pipe, a tube or a cable in a slot or groove in a building structure such as a ceiling, wall or a floor.

### Background of the invention

When working with building constructions, the provisional fixing of cables and pipes in slots or grooves in walls, ceilings and floors can be very challenging. Often cables, tubes and pipes are temporarily fixed to a slot or a groove by means of nails, screws or pins before the building structure is plastered. Application of nails, however, is both time consuming and often insufficient due to the fact that the nails tend to become dislodged.

Accordingly, several attempts have been made to provide a fixing device for fixing pipes, tubes and cables in a slot or groove in a building structure such as a ceiling, wall or a floor.

One example of a prior art fixing device is disclosed in EP 0937929 B1. This fixing device is configured to be attached to a pipe or a cable and then be attached to a groove. The fixing device comprises a C-shaped clamp provided with a set of flexible wings and a set of flexible hooks adapted to bear against and hereby fix the fixing device to a groove. This fixing device requires a deep groove because the wings protrude backwards towards the open end of the groove, and the fixing device has no means for removing the fixing device from the groove.

US 2004/0115004 A1 discloses a wedge for fixing a cable in a groove. Said wedge comprises a deformable part and further two arms that can be deformed relative to the basis of the wedge, when the wedge is positioned in the groove. The cable or cables to be fixed can be placed beneath the wedge (due to the deformability) and/or within the wedge in the hollow part suited for receiving the cable.

GB 1 249 950 A disclose a very simple, U-shaped clip having limbs extending outwards from base of the U-shaped base. When the clip is inserted in a groove for fixing e.g. a cable, the U-shaped base points away from the groove. The clip can be pushed into the groove using a tool or a nail, thus, fixing the cable.

EP 0 758 065 A1 discloses a clamping member for fixing an object in a recess, wherein the clamping member comprises slots for receiving a plier to insert or remove the clamping member from the recess.

DE 10 2006 008446 A1 and FR 2 832 484 A1 disclose further examples of prior art fixing devices having arms or lamellas arranged to exert a force towards the side portions of a groove, and clips or similar features to fix a cable to the device.

The prior art fixing devices are either difficult to use or are not suitable for being replaced in case the fixing device needs to be removed or placed differently.

Thus, it is desirable to have a fixing device that can be easily replaced and is suitable for fixing a cable, a tube or a pipe in a less deep groove than the prior art fixing devices.

Moreover, it is desirable to have a fixing device that can be used to fix more than one pipe or cable in a groove.

### Summary of the invention

The inventor has identified the above-mentioned problems and challenges related to prior art fixing devices and subsequently made the below-described invention providing advantages and/or alternative solutions to the prior art.

The object of the present invention can be achieved by a fixing device as defined in claim 1. Preferred embodiments are defined in the dependent sub claims. Various embodiments are explained in the following description and illustrated in the accompanying drawings.

According to the invention, a fixing device is provided which is suitable for fixing a cable, tube or a pipe in slot or groove, and which can be easily removed and/or replaced if necessary.

When installing the fixing device, the fixing device may advantageously first be fixed to the one more cables, pipes or tubes by grasping them in the cavity via the opening, whereby the, e.g., cable and fixing device can inserted into the slot or groove together whereby the one or more arm members are pressed towards the body portion.

After inserting the fixing device into the slot or groove, the arm members will exert a force towards the side portions of the groove to maintain the fixing device and, e.g., cable in position in the slot or groove.

The one or more removal members advantageously allows for simple removal of the fixing device and, e.g., cable, from the slot or groove, for example to adjust the installation or add a further cable. According to a preferred embodiment, the removal members and arm member configuration allow for removing the fixing device with simple means such as fingers or pliers, without causing damage to neither fixing device nor slot or groove, thereby allowing immediate reinstallation or later reuse.

The fixing device according to the invention is a fixing device for fixing a cable, pipe or tube to a slot or a groove having side portions. The cable, pipe or tube may be used for electrical installations or for conducts for a fluid, e.g. a liquid such as water, e.g. clean water or waste water, or a gas, e.g. compressed air or a cooling refrigerant.

Various embodiments of the invention may support cables, pipes and tubes of various cross-sections and dimensions, e.g. round, flat or rectangular, with or without transversal or longitudinal corrugation, for example with a largest cross-sectional dimension between 1mm and 1m, preferably between 5mm and 300mm, more preferably between 8mm and 50mm, for example 11mm, 13mm, 15mm, 16mm, 18mm, 32mm, 40mm or 50mm.

In a preferred embodiment the body portion is made of a flexible material, e.g. a plastic material, and moulded in such a way that the opening is considerably smaller, e.g. more than 30% smaller, than the largest cross-sectional dimension of the cavity but can temporarily be enlarged to at least that largest dimension, thereby being able to receive, accommodate and hold a range of various diameters and/or numbers of cables, pipes or tubes.

The fixing device according to the invention may be used to fix a utility water pipe in a slot or a groove. It is possible to fix more than one pipe in the same slot or groove.

The fixing device according to the invention may be used to keep a cable, pipe or tube fixed to a slot or a groove until the slot or groove has been plastered. This fixation may be regarded as a temporary fixation that is supported afterwards.

The slot or groove may be provided in a building structure such as a floor, ceiling or wall by way of example.

The fixing device comprises a body portion provided with an opening for insertion of a cable, pipe or tube in order to fix the cable, pipe or tube to the fixing device.

It may be an advantage that the opening is smaller than the diameter of the cable, pipe or tube. Hereby, the cable, pipe or tube will be kept fixed to the fixing device unless a large force is applied to pull the cable, pipe or tube away. By providing the fixing device in a flexible material, e.g. a plastic material, the cable, pipe or tube may be pressed through the opening due to the flexibility of the material.

The fixing device comprises one or more arm members attached to the body portion. It may be an advantage that the fixing device comprises two arm members. The arm members may be symmetrically arranged.

The one or more arm members are configured to be pressed towards the central portion of the fixing device (e.g. the longitudinal axis of the fixing device) while inserting the fixing device to the slot or groove. Hereby, it is possible to reduce the width of the fixing device and thus arrange it in a slot or groove.

The one or more arm members are configured to exert a force towards the side portions of the slot or groove. Hereby, the fixing device can be maintained in the slot or groove due to the friction between arm members and the side portions of the slot or groove.

The fixing device comprises one or more removal members that are accessible when the fixing device has been attached to the slot or groove. The removal members may have any suitable size and shape. It is, however, preferred that the removal members are easy to access from outside the slot or groove e.g. by means of a person's fingers or a simple hand tool like pliers.

It may be an advantage that the one or more removal members protrude towards the opening of the slot or a groove when the fixing device has been attached to the slot or groove.

Hereby, it is easy to access the removal members from outside the slot or groove by means of fingers or a hand tool like pliers.

The removal members may be provided with a surface structure facilitating a firm grip when a hand tool (e.g. pliers) is used to grip the removal members.

It may be advantageous that the cross-section of the body portion is basically C-shaped with said opening forming the opening in the 'C'.

Hereby it is possible to make the body portion fit a cable, pipe or tube having a circular cross-section and at the same time make the body portion in a thin geometry.

The opening faces the bottom of the slot or groove, when the fixing device has been attached to the slot or groove.

Hereby, it is possible to prevent the cable, tube or pipe from leaving the fixing device in case of damage of the fixing device. Further, it may hereby be obtained, that the cable, pipe or tube is held in place in the slot or groove even if the cable, pipe or tube leaves the cavity e.g. due to excessive straining or twisting.

It may be an advantage that at least one of the one or more removal members extends along the length of the fixing device.

Hereby, the removal member can be made by a simple moulding process. Accordingly, it is possible to manufacture the fixing device in a cheap manner.

It may be an advantage that the removal member extends along the entire length of the fixing device. This construction may be easier to produce.

It may be advantageous that at least one of the one or more removal members is provided at the distal end of at least one of the arm members.

Hereby, it is possible to access the removal member provided in the distal end of the arm member, when the fixing device is attached to a slot or groove. Thus, the arm member can be pressed towards the central portion of the fixing device (e.g. towards each other in case the fixing device comprises two arm members) in order to "release" the force exerted from the arm members towards the slot or groove. Accordingly, the fixing device can be moved or removed from the slot or groove.

It may be an advantage that the removal members have an arced geometry, preferably a, basically, semi-circular cross-section.

It may be an advantage that at least one and preferably all of the one or more removal members are configured to not be in contact with the side portions of the slot or groove when the fixing device has been attached to the slot or groove.

Hereby may be achieved improved access to the removal members, which protrude from the side portions sufficiently to catch by pliers or finger tips.

It may be beneficial that the body portion comprises a C-shaped "arm member-free" portion to which no arm members are attached and the angle of the C-shaped "arm member-free" portion exceeds 180 degrees to at least partially enclose said cavity arranged to receive a cable, pipe or tube.

Hereby, the fixing device is capable of preventing the cable, tube or pipe attached to the fixing device from being removed from the fixing device through the opening, when the arm members are being pressed towards the central portion of the fixing device.

It may be an advantage that the angle is approximately 190 degrees, 195 degrees or 200 degrees.

It may be advantageous that the arm members are provided with protrusions configured to engage said side portions to facilitate fixation of the fixing device in the slot or groove.

Hereby, the fixation of the fixing device can be enhanced.

The protrusions may have any suitable size and geometry. It may be preferred that the protrusions are shaped as saw-teeth.

It may be beneficial that the fixing device comprises a first pointed portion and a second pointed portion extending in extension of the body portion and the arm members, wherein the first pointed portion comprises a first plane section, wherein the second pointed portion comprises a first plane section, wherein the opening is provided between the first pointed portion and the second pointed portion.

Hereby, insertion of a pipe, cable or tube into the fixing device through the opening is eased.

It may be an advantage that the first pointed portion comprises a second plane section and that the second pointed portion comprises a second plane section.

Hereby, it is possible to apply the second plane section as a contact surface e.g. for contact with a member bearing against the fixing device (e.g. another fixing device).

It may an advantage that the fixing device comprises attachment members for coupling with a second fixing device.

Hereby, it possible to provide a fixing device (wherein a first and a second fixing device are coupled to each other) that can be used to fix more than one pipe or cable in a groove.

In this context, coupling means fixing or arranging in a manner in which the first and the second fixing device can be kept together when attached in a slot or a groove.

The attachment members may be protrusions providing a mechanical engagement between a first fixing device and a second fixing device,

The attachment members may be a protrusion member and a corresponding groove member adapted to engagingly interact with the protrusion member and hereby provide an attachment between the first fixing device and the second fixing device.

It may be an advantage that the body portion is provided with a number of reinforcement structures, preferably a first reinforcement structure and a second reinforcement structure.

Hereby, the mechanical strength of the fixing device can be increased. Accordingly, the geometry of the remaining parts of the fixing device can be kept as thin as possible.

It may be beneficial that the reinforcement structures are provided symmetrically relative to the normal axis of the fixing device.

It may be an advantage that the reinforcement structures have a, basically, semi-cylindrical geometry and are provided at the outside surface of the body portion of the fixing device.

It may be advantageous that the arm members have a length that basically corresponds to the width of the body portion and the arm members are attached to the top portion of the body portion.

Hereby, the fixing device can be inserted into a less deep groove than the prior art fixing devices.

It may be beneficial that the fixing device comprises retainment members forming a plurality of canal structures each configured to receive and retain a cable, pipe or tube. Hereby, it is possible to apply one fixing device to retain several cables, pipes or tubes, e.g. two cables.

It may be an advantage that at least one of the one or more removal members is extending radially from said body portion.

Hereby may be facilitated an easily accessible removal member at a central position the body portion, which may be more robust than the arm members for pulling the fixing device out of a slot or groove for removal or adjustment.

It may be an advantage that a largest cross-sectional dimension of said cavity or canal structure is in the range of 1mm to 1m, preferably between 5mm and 300mm, more preferably between 8mm and 50mm, for example 11mm, 13mm, 15mm, 16mm, 18mm, 32mm, 40mm or 50mm.

Thereby a wide range of different cables, pipes and tubes from the construction business may be supported by variously sized fixing devices according to the invention. In an embodiment comprising retainment members forming canal structures, the retainment members may form differently sized canal structures so that one fixing device may provide firm hold of different cable, tube or pipe dimensions, e.g. two different electrical cable dimensions.

### The drawings

Various embodiments of the invention will in the following be described with reference to the drawings where
Fig. 1A shows a top view of a fixing device according to the invention;
Fig. 1B shows a perspective view of the fixing device shown in Fig. 1A;
Fig. 1C shows a side view of the fixing device shown in Fig. 1A and Fig. 1B;
Fig. 1D shows a perspective view of the fixing device shown in Fig. 1A, Fig. 1B and Fig. 1C;
Fig. 2A shows a schematic cross-sectional view of a building structure and a fixing device being attached to a pipe that is provided in a groove of the building structure;
Fig. 2B shows a schematic cross-sectional view of the fixing device shown in Fig. 2A, where the fixing device is attached to a pipe and fixed in the groove of the building structure;
Fig. 3A shows a perspective view of a fixing device according to the invention;
Fig. 3B shows another perspective view of the fixing device shown in Fig. 3A;
Fig. 3C shows a top view of two fixing devices like the one shown in Fig. 3A and in Fig. 3B;
Fig. 4 shows a top view of two fixing devices according to the invention;
Fig. 5A shows a perspective view of a fixing device according to the invention;
Fig. 5B shows another perspective view of the fixing device shown in Fig. 5A;
Fig. 5C shows a top view of the fixing device shown in Fig. 5A and in Fig. 5B;
Fig. 6A shows a perspective view of a fixing device according to the invention;
Fig. 6B shows another perspective view of the fixing device shown in Fig. 6A;
Fig. 6C shows a top view of the fixing device shown in Fig. 6A and in Fig. 6B
Fig. 7A shows a first perspective view of a fixing device according to the invention;
Fig. 7B shows another perspective view of the fixing device shown in Fig. 7A;
Fig. 7C shows a top view of the fixing device shown in Fig. 7A and Fig. 7B;
Fig. 7D shows a view of the fixing device shown in Fig. 7C in a configuration, in which a first cable and a second cable are retained in retainment structures;
Fig. 8 shows a schematic cross-sectional view of two the fixing devices attached to a groove
Fig. 9A shows a top view of a fixing device according to the invention and
Fig. 9B shows a schematic cross-sectional view of two fixing devices like the one shown in Fig. 9A attached to a groove.

### Detailed description

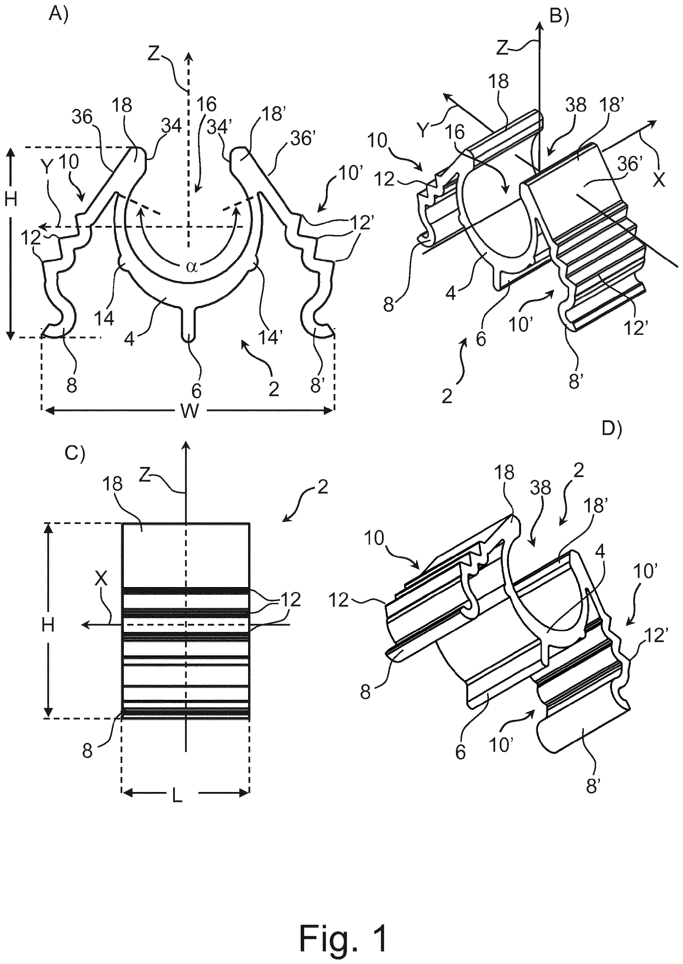

Referring now in detail to the drawings for illustrating preferred embodiments of the present invention, a fixing device 2 of the present invention is illustrated in Fig. 1.

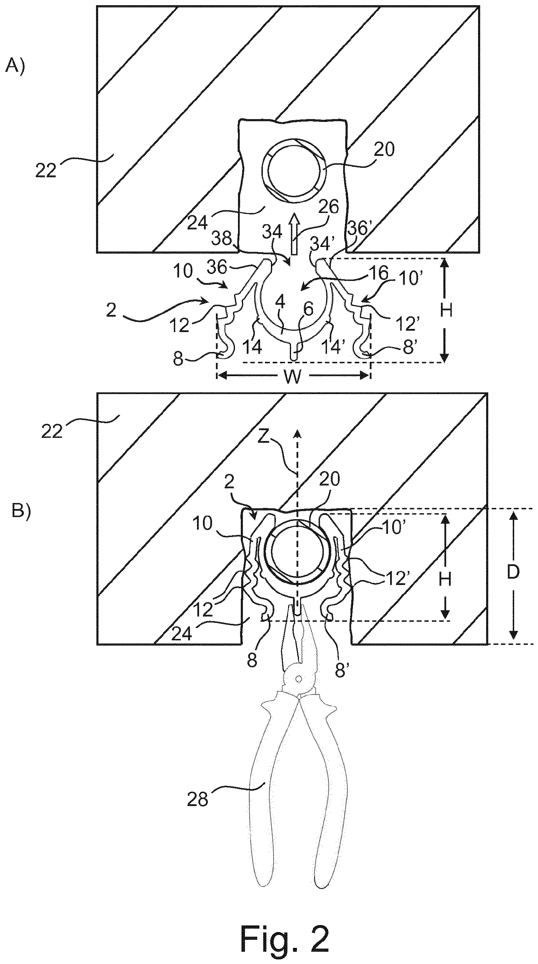

Fig. 1 illustrates four different views of a fixing device 2 according to the invention. The fixing device 2 is configured to be attached to the outside of a pipe or a cable and to be attached to a groove (see Fig. 2) in such a manner that the pipe or a cable is fixedly received by the cavity 16 of the fixing device 2.

Fig. 1A illustrates a top view of a fixing device 2 according to the invention. Fig. 1B illustrates a perspective view of the fixing device 2 shown in Fig. 1A. Fig. 1C illustrates a side view of the fixing device 2 shown in Fig. 1A and Fig. 1B and Fig. 1D illustrates a perspective view of the fixing device 2 shown in Fig. 1A, Fig. 1B and Fig. 1C.

The fixing device 2 comprises a body portion 4 having a C-shaped cross-section. The body portion 4 is provided with an opening 38 allowing for insertion of a pipe or a cable into cavity 16 in order to fix the cable or pipe to the fixing device 2. The C-shaped body portion 4 is provided with a radially extending removal member 6 extending along the longitudinal axis X of the fixing device 2. The removal member 6 provides access to the fixing device 2 when the fixing device 2 has been attached to a groove (see Fig. 2). The removal member 6 extends along the entire length of the fixing device 2, however, it would be possible to shorten or lengthen the removal member 6 if desired. The removal member 6 has a plate-shaped geometry making it easy to grip it with a hand tool in order to replace or remove the fixing device (see Fig. 2B).

The C-shaped body portion 4 is provided with a first reinforcement structure 14 and an identical second reinforcement structure 14'. The reinforcement structures 14, 14' are provided symmetrically relative to the normal axis Z of the fixing device 2. The reinforcement structures 14, 14' have a, basically, semi-cylindrical geometry and are provided at the outside surface of the body portion 4 of the fixing device 2.

A first arm member 10 and a second arm member 10' are attached to fixing device 2 in the area of the opening 38, i.e. the top portion of the fixing device 2 when seen in the direction as illustrated in Fig. 1. The fixing device 2 comprises a first pointed portion 18 and a second pointed portion 18' extending in extension of the body portion 4 and the arm members 10, 10'. The first pointed portion 18 comprises a first plane section 34 and a second plane section 36. Likewise, the second pointed portion 18' comprises a first plane section 34' and a second plane section 36'. The opening 38 is provided between the first pointed portion 18 and the second pointed portion 18'.

The arm members 10, 10' are adapted to be rotated relative to the body portion 4 in order to fixedly attach the fixing device 2 to a groove (see Fig. 2), e.g. by pressing them towards the body portion. The arm members 10, 10' are provided with protrusions 12, 12' intended to facilitate fixation of the fixing device 2 in a groove or slot. A removal member 8, 8' is provided in the distal end of each arm member 10, 10'. These removal members 8, 8' have a, basically, semi-circular cross-section and are configured to allow easy access for removal of the fixing device 2, when the fixing device 2 is attached in a groove or a slot (see Fig. 2B).

The fixing device 2 is symmetric about the plane spanned by the longitudinal axis X and the normal axis Z and about the plane spanned by the lateral axis Y and the normal axis Z.

It may be an advantage to manufacture the fixing device 2 in a plastic material. Hereby, it is possible to elastically bend the arm members 10, 10' relative to the body portion 4 of the fixing device 2 and to provide flexible arm members 10, 10'.

The arm members 10, 10' are attached to the body portion 4 the upper half of the body portion 4. Accordingly, the body portion comprises a C-shaped portion to which no arm members 10, 10' are attached. The angle α of this C-shaped "arm member-free" portion exceeds 180 degrees. The angle α may be 190 degrees, 195 degrees or 200 degrees by way of example.

The height H, length L and width W of the fixing device 2 is indicated in Fig. 1A and Fig. 1C, respectively.

Fig. 2A illustrates a schematic cross-sectional view of a building structure 22 and a fixing device 2 according to the invention being attached to a pipe 20 that is provided in a groove 24 of the building structure 22. The building structure 22 may be a wall, floor or ceiling of a domestic building by way of example.

In Fig. 2A, the pipe 20 has not yet been fixed to the fixing device 2. The fixing device 2 is, however, being moved towards (in the direction 26 indicated by an arrow 26) the pipe 20 in order to insert the pipe 20 through the opening 38 of the fixing device 2 and hereby fixedly attach the pipe 20 the fixing device 2.

The fixing device 2 corresponds to the one illustrated in Fig. 1. Accordingly, the fixing device 2 comprises a body portion 4 having a basically C-shaped cross-section, to which a centrally arranged removal member 6 is provided.

The fixing device 2 has not yet been compressed by pressing the arm members 10, 10' together. Therefore, the width W of the fixing device 2 is large. In fact, the width W of the fixing device 2 is larger than the width of the groove 24 into which the fixing device 2 is intended to be inserted.

Fig. 2B illustrates a schematic cross-sectional view of the fixing device 2 shown in Fig. 2A. In Fig. 2B, the fixing device 2 has been attached to the pipe 20 and is fixed in the groove 24 of the building structure 22.

Accordingly, the protrusions 12, 12' are brought into contact with the side portions of the groove 24. Since the arm members 10, 10' have been forcedly bent towards the normal axis Z of the fixing device 2, the arm members 10, 10' exert a force towards the side portions of the groove 24. Hereby, a normal force will be provided towards the side portions of the groove 24. Accordingly, the arm members 10, 10' may be at least partly fixed to the side portions of the groove 24 by friction between the arm members 10, 10' and the side portions of the groove 24.

It can be seen that the height H of the fixing device 2 almost corresponds to the depth D of the groove 24. The depth D of the groove 24 is only slightly larger than the height H of the fixing device 2. Nevertheless, the fixing device 2 is completely received within the groove 24, and it is possible to temporarily fixe the pipe 20 to the groove 24 and afterwards plaster the building structure 22.

As it can be seen in Fig. 2B, a hand tool 28 (pliers) grips the removal member 6. Accordingly, the fixing device 2 can be moved or replaced. If the fixing device 2 needs to be removed, this would be possible by pressing the two removal members 8, 8' toward each other (and towards the normal axis Z). Hereby, the force exerted by the arm members 10, 10' towards the side portions of the groove 24 will be reduced. Hereby, the normal force and thus the friction will be reduced so that the fixing device 2 can be removed from the groove 24.

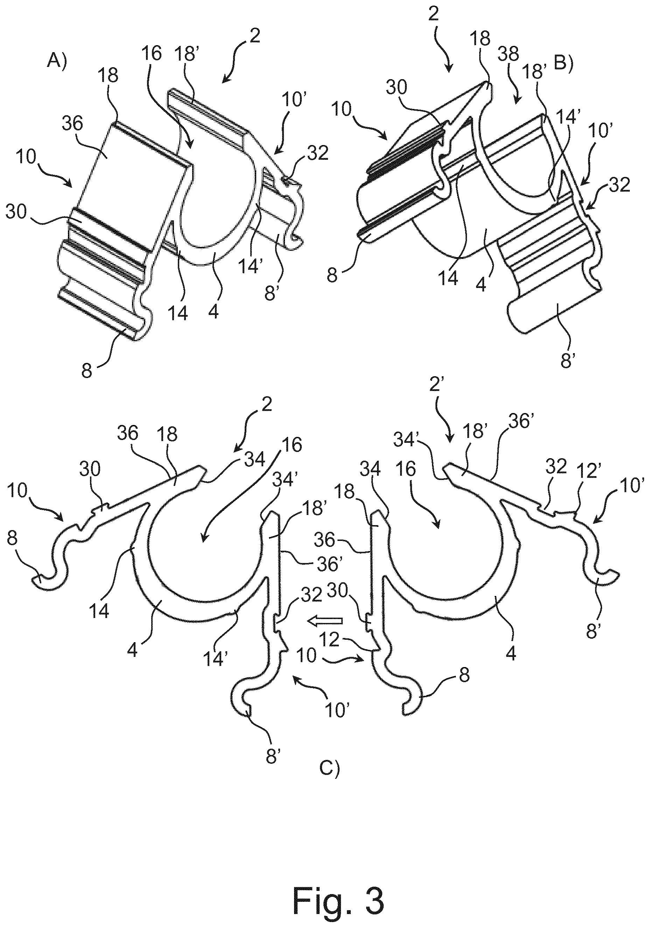

Fig. 3A and Fig. 3B illustrate two different perspective views of a fixing device 2 according to the invention. Fig. 3C illustrates a top view of two fixing devices 2, 2' like the one shown in Fig. 3A and in Fig. 3B.

The fixing device 2 comprises a body portion 4 having a C-shaped cross-section. An opening 38 allowing for insertion of a pipe or a cable in order to fix the cable or pipe to the fixing device 2 is provided in the body portion 4. The C-shaped body portion 4 has a first reinforcement structure 14 and an identical second reinforcement structure 14' and the reinforcement structures 14, 14' are provided symmetrically. The reinforcement structures 14, 14' are provided at the outside surface of the body portion 4 of the fixing device 2 and have a, basically, semi-cylindrical geometry.

A first arm member 10 and a second arm member 10' are attached to the upper portion of the fixing device 2. The fixing device 2 comprises a first pointed portion 18 and a second pointed portion 18'. The first pointed portion 18 and the second pointed portion 18' extend in extension of the body portion 4 and the arm members 10, 10'. The first pointed portion 18 and the second pointed portion 18' each comprise a first plane section 34, 34' and a second plane section 36, 36', respectively. An opening 38 is provided between the first pointed portion 18 and the second pointed portion 18'.

The arm members 10, 10' are flexibly mounted in order to allow the arm members 10, 10' to be pressed together in order to reduce the width of the fixing device 2 and attach the fixing device 2 to a groove (see Fig. 2). The arm members 10, 10' are equipped with protrusions 12, 12' for facilitating fixation of the fixing device 2 in a groove or slot.

A removal member 8, 8' is provided in the distal ends of the arm member 10, 10'. The removal members 8, 8' have a, basically, semi-circular cross-section and are intended to ease the removal of the fixing device 2 from a groove or a slot (see Fig. 2B).

The fixing devices 2, 2' are provided with a protrusion member 30 and a corresponding groove member 32 adapted to receive the protrusion member 30. As it can be seen in Fig. 3C, it is possible to fix a first fixing device 2 and a second fixing device 2', according to the invention, to each other by means of the protrusion member 30 and the corresponding groove member 32.

When two fixing devices 2, 2' have been fixed to each other, the coupled fixing device can be used to fix pairs of pipes or cables. This may be an advantage in several applications, including pipe installations having an inlet and outlet by way of example.

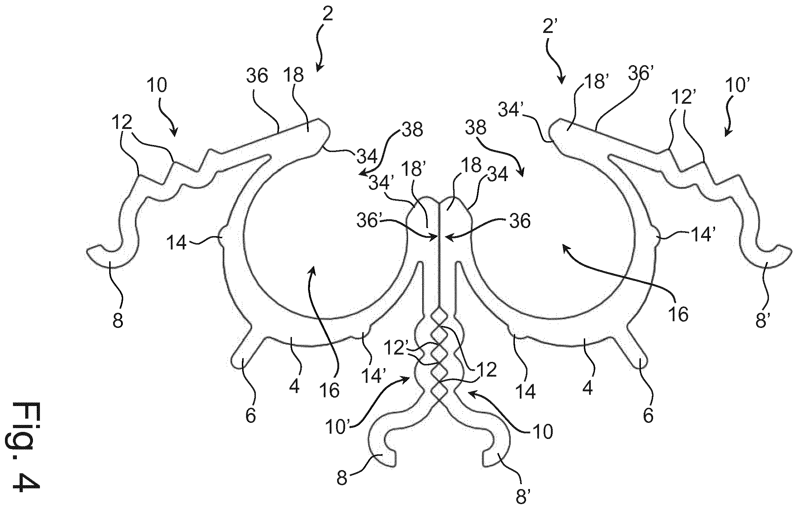

Fig. 4 illustrates a top view of two fixing devices 2, 2' according to the invention. Each of the fixing devices 2, 2' comprises a body portion 4 having a, basically, C-shaped cross-section. The body portion 4 of each fixing device 2, 2' is provided with an opening 38 allowing for insertion of a pipe or a cable in order to fix the cable or pipe to the fixing devices 2, 2'.

Each of the fixing devices 2, 2' have a C-shaped body portion 4 provided with a radially extending removal member 6 extending along the longitudinal axis of the fixing device 2, 2'. By means of the removal members 6, it is possible to get access to the fixing devices 2, 2' when the fixing devices 2, 2' have been attached to a groove. The removal members 6 have a plate-shaped geometry. Accordingly, it is easy to grip each of the removal members 6 with a hand tool in order to replace or remove the fixing devices 2, 2'.

The C-shaped body portions 4 of the fixing devices 2, 2' are provided with a first reinforcement structure 14 and an identical second reinforcement structure 14'. The reinforcement structures 14, 14' have a basically semi-cylindrical geometry and are provided at the outside surface of the body portion 4 of the fixing devices 2, 2' in order to reinforce the fixing devices 2, 2'.

A first arm member 10 and a second arm member 10' are attached to the top portion of each of the fixing devices 2, 2'. Each of the fixing devices 2, 2' comprises a first pointed portion 18 and a second pointed portion 18' extending in extension of the body portion 4 and the arm members 10, 10'. The first pointed portion 18 comprises a first plane section 34 and a second plane section 36. Similarly, the second pointed portion 18' comprises a first plane section 34' and a second plane section 36'. An opening 38 is provided between the first pointed portion 18 and the second pointed portion 18'.

The arm members 10, 10' are flexibly attached to the body portion 4 and the arm members 10, 10' are provided with protrusions 12, 12' intended to facilitate fixation of the fixing device 2 in a groove or slot. The protrusions 12, 12' are also configured to mechanically engage the two fixing devices 2, 2' to each other, when their arm members 10', 10 are brought into contact like illustrated in Fig. 4. It can be seen that the plane section 36' of the first fixing device 2 bears against the plane section 36 of the second fixing device 2'.

A removal member 8, 8' is provided in the distal end of each of the arm member 10, 10'. The removal members 8, 8' have a, basically, semi-circular cross-section and are configured to provide easy access in order to remove or replace the fixing devices 2, 2' from a groove or a slot.

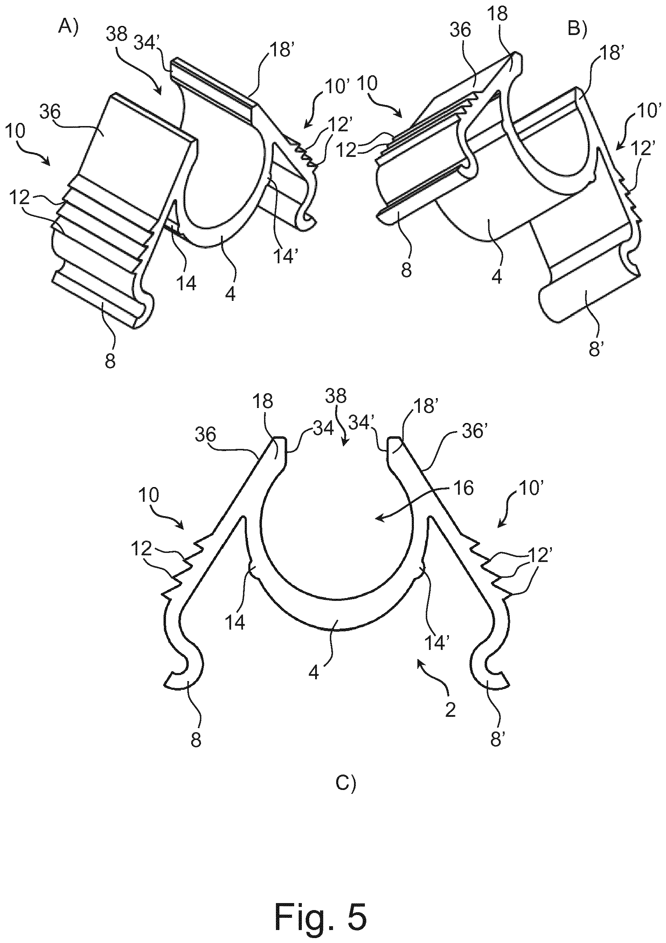

Fig. 5A illustrates a first perspective view of a fixing device 2 according to the invention, Fig. 5B illustrates a second perspective view of the fixing device shown in Fig. 5A, and Fig. 5C illustrates a top view of the fixing device shown in Fig. 5A and in Fig. 5B.

The fixing device 2 comprises a body portion 4 provided with an opening 38. The opening 38 allows for insertion of a pipe or a cable in order to fix the cable or pipe to the fixing device 2. The body portion 4 comprises a first reinforcement structure 14 and a second reinforcement structure 14' having a, basically, semi-cylindrical geometry. The reinforcement structures 14, 14' are provided at the outside surface of the body portion 4 of the fixing device 2.

A first arm member 10 and a second arm member 10' are attached to the top portion of the fixing device 2. The fixing device 2 is provided with a first pointed portion 18 and a second pointed portion 18'. The pointed portions 18, 18' extend in extension of the body portion 4 and the arm members 10, 10'. The pointed portions 18, 18' each comprise a first plane section 34, 34' and a second plane section 36, 36'. The opening 38 is provided between the pointed portions 18, 18'.

The arm members 10, 10' are flexibly attached to the body portion 4 in order to allow the arm members 10, 10' to be pressed together. Hereby, it is possible to reduce the width of the fixing device 2 and attach in a groove or slot. The arm members 10, 10' are equipped with protrusions 12, 12' shaped as saw-teeth. These protrusions 12, 12' facilitate fixation of the fixing device 2 in a groove or slot.

A removal member 8, 8' is provided in the distal ends of the arm member 10, 10'. The removal members 8, 8' have an arced geometry and are configured to make it easier to remove the fixing device 2 from a groove or a slot.

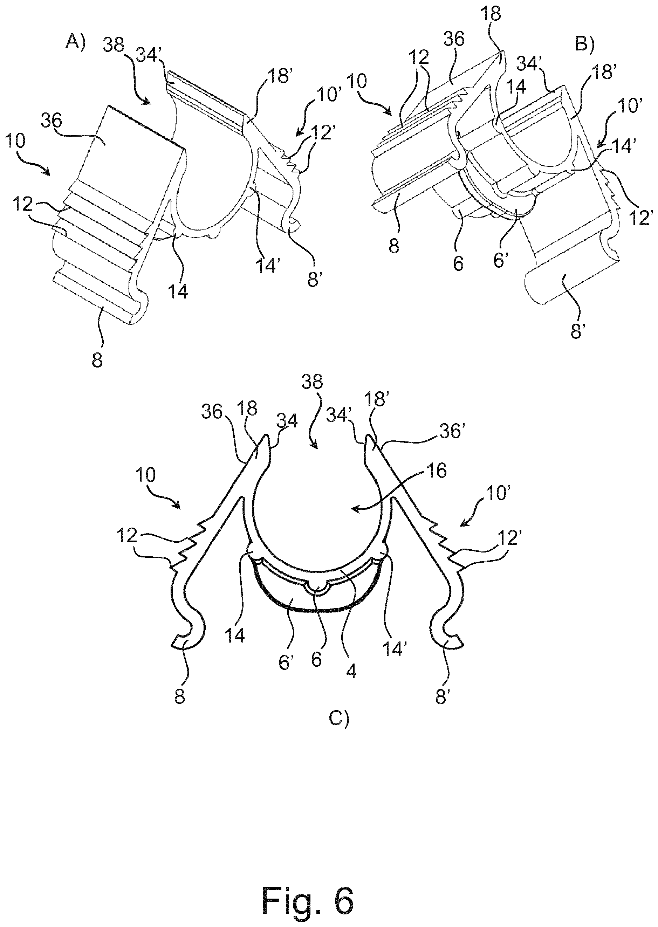

Fig. 6A illustrates a first perspective view of a fixing device 2 according to the invention. Fig. 6B illustrates another perspective view of the fixing device 2 shown in Fig. 6A, and Fig. 6C illustrates a top view of the fixing device 2 shown in Fig. 6A and in Fig. 6B.

The fixing device 2 comprises a body portion 4 having a, basically, C-shaped cross-section provided with an opening 38 allowing for insertion of a pipe or a cable in order to fix the cable or pipe to the fixing device 2. The body portion 4 is provided with a first removal member 6 extending along the longitudinal axis of the fixing device 2. The body portion 4 is moreover provided with another (basically plate-shaped) removal member 6' extending perpendicular to the first removal member 6.

When the fixing device 2 has been attached to a groove, it is possible to get access to the fixing device 2 by means of the removal members 6, 6'.

The body portion 4 is provided with a first reinforcement structure 14 and a second reinforcement structure 14'. The reinforcement structures 14, 14' have a, basically, semi-cylindrical geometry and are provided at the outside surface of the body portion.

A first arm member 10 and a second arm member 10' are attached to the top portion of the fixing device 2. The fixing device 2 comprises a first pointed portion 18 and a second pointed portion 18' extending in extension of the body portion 4 and the arm members 10, 10'. The first pointed portion 18 comprises a first plane section 34 and a second plane section 36. Similarly, the second pointed portion 18' comprises a first plane section 34' and a second plane section 36'. An opening 38 is provided between the first pointed portion 18 and the second pointed portion 18'.

The arm members 10, 10' are attached to the body portion 4 in such a manner that they can be rotated. The arm members 10, 10' are provided with protrusions 12, 12' for facilitating a reliable fixation of the fixing device 2 in a groove or slot.

A removal member 8, 8' is provided in the distal end of the arm members 10, 10'. The removal members 8, 8' have a, basically, semi-circular cross-section and are arranged to provide easy access in order to remove or replace the fixing device 2 from a groove or a slot.

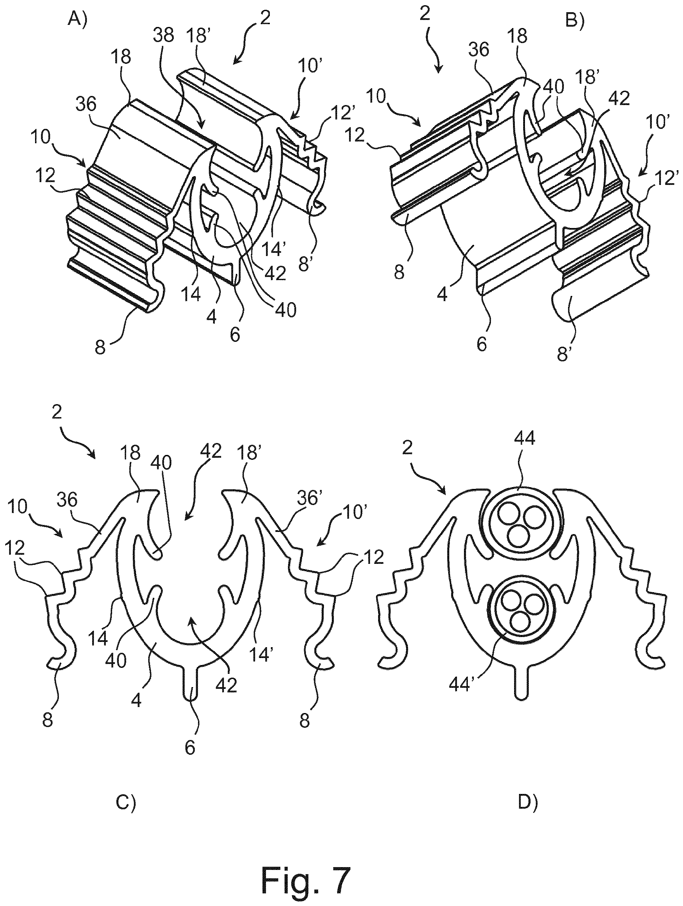

Fig. 7A illustrates a first perspective view of a fixing device 2 according to the invention, whereas Fig. 7B illustrates another perspective view of the fixing device 2 shown in Fig. 7A. Fig. 7C illustrates a top view of the fixing device 2 shown in Fig. 7A and in Fig. 7B and Fig. 7D illustrates a view of the fixing device 2 shown in Fig. 7C in a configuration, in which a first cable 44 and a second cable 44' are retained in retainment structures 42.

The fixing device 2 comprises a body portion 4 having a, basically, C-shaped cross-section provided with an opening 38 for insertion of pipes, cables or tubes in order to fix the cables, tubes or pipes to the fixing device 2. The body portion 4 is equipped with a removal member 6 extending along the longitudinal axis of the fixing device 2.

It is possible to get access to the fixing device 2 by means of the removal member 6 when the fixing device 2 has been attached to a groove. The removal member 6 is symmetrically provided at the bottom portion of the body portion 4.

The body portion 4 is provided with a first reinforcement structure 14 and a second reinforcement structure 14' being provided at the outside surface of the body portion and having a basically, semi-cylindrical geometry.

A first arm member 10 and a second arm member 10' are attached to the top portion of the fixing device 2. The fixing device 2 comprises a first pointed portion 18 and a second pointed portion 18' extending in extension of the body portion 4 and the arm members 10, 10'. The first pointed portion 18 comprises a plane section 36 and the second pointed portion 18' comprises a plane section 36'.

The arm members 10, 10' are attached to the body portion 4 in a manner that allows for bending and rotating the arm members in order to arrange the fixing device 2 in a groove or a slot. The arm members 10, 10' are provided with protrusions 12, 12' adapted to facilitate a reliable fixation of the fixing device 2 in a groove or slot.

A removal member 8, 8' is provided in the distal end of each of the two arm members 10, 10'. The removal members 8, 8' have a, basically, semi-circular cross-section and are arranged to ease the access so that the fixing device 2 can be removed or moved.

The first pointed portion 18, the second pointed portion 18' and the corresponding retainment members 40 constitute a retainment structure 42. The retainment structure 42 is adapted to fit a cylindrical body such as a cable 44 as shown in Fig. 7D. Likewise, the bottom portion of the body portion 4 and the lower retainment members 40 constitute another retainment structure 42 configured to fit a cylindrical body such as a cable 44' as shown in Fig. 7D.

Fig. 7D illustrates an end view of the fixing device 2 shown in Fig. 7C in a configuration, in which a first cable 44 and a second cable 44' are retained in the retainment structures 42.

By means of the fixing device 2 shown in Fig. 7, one can provisionally fix a pair of cables, pipes or tubes in slots or grooves in walls, ceilings and floors. The fixing device 2 secures that the pair of cables, pipes or tubes are safely retained with a predefined distance to each other.

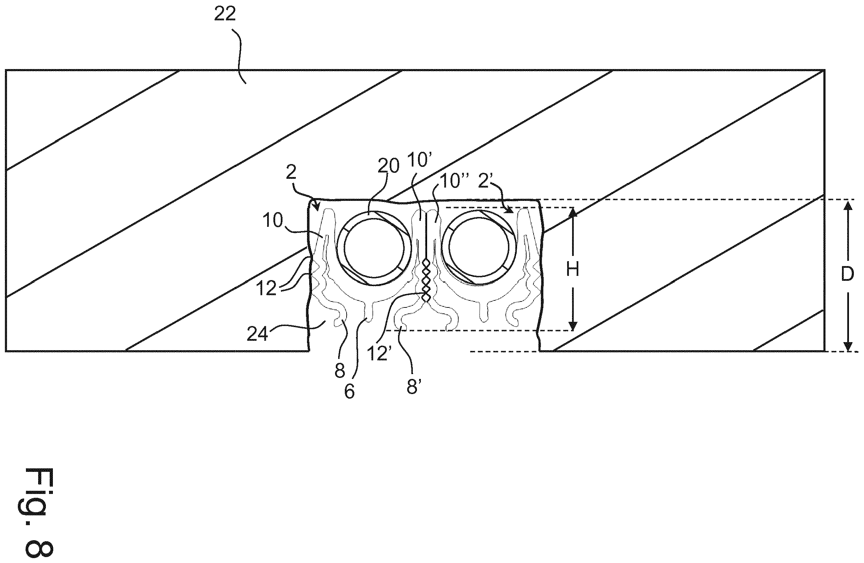

Fig. 8 illustrates a schematic cross-sectional view of two the fixing devices 2, 2' corresponding to the one shown in Fig. 2A. In Fig. 8, each of the fixing devices 2, 2' are attached to the pipe 20 and the fixing devices 2, 2' are fixed in the groove 24 of the building structure 22.

Therefore, the protrusions 12, 12' are brought into contact with the side portions of the groove 24. Since the arm members 10, 10' have been forcedly bent towards the central portion of the fixing devices 2, 2', the arm members 10, 10' exert a force towards the side portions of the groove 24 and the abutting arm members 10' 10". Hereby, a normal force will be provided towards the side portions of the groove 24 and the abutting arm members 10', 10". Accordingly, the fixing devices 2, 2' will be fixed to each other and to the side portions of the groove.

It can be seen that the height H of the fixing device 2 almost corresponds to the depth D of the groove 24. The depth D of the groove 24 is only slightly larger than the height H of the fixing devices 2, 2'. The fixing devices 2, 2' are completely received within the groove 24, and thus it is possible to temporarily fix the pipes 20 to the groove 24 and afterwards plaster the building structure 22.

The fixing devices 2 can be removed by pulling removal member 6 or by pressing the removal members 8, 8' toward each and hereby reducing the force exerted by the arm members 10, 10' towards the side portions of the groove 24 so that the fixing devices 2, 2' can be removed from the groove 24.

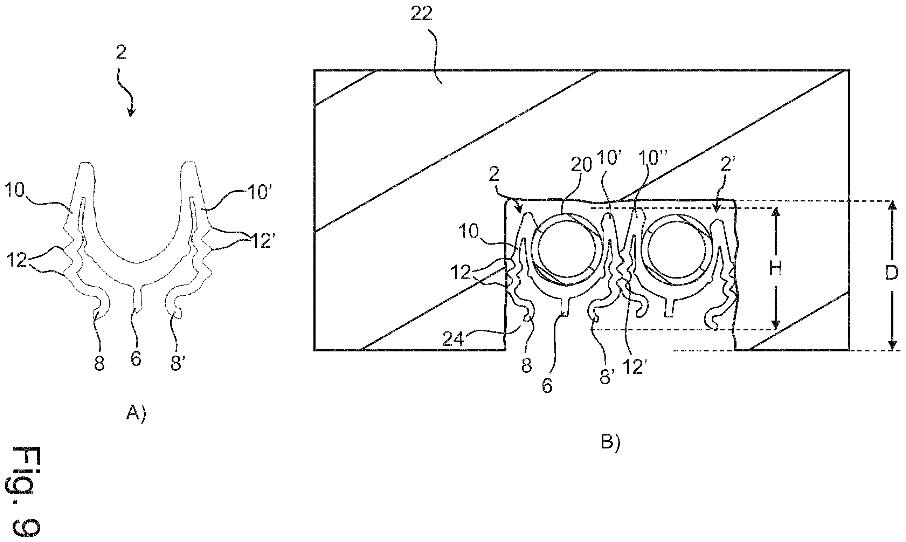

Fig. 9A illustrates a top view of a fixing device 2 according to the invention. The fixing device 2 comprises a body portion having a basically C-shaped cross-section. The body portion is provided with an opening for insertion of a pipe or a. The body portion 4 is provided with a radially extending removal member 6 providing access to the fixing device 2 when the fixing device 2 has been attached to a groove like shown in Fig. 9B.

A first arm member 10 and a second arm member 10' are attached to the top portion of the fixing device 2. The arm members 10, 10' are provided with protrusions 12, 12' configured to facilitate fixation of the fixing device 2 in a groove or slot. A removal member 8, 8' is provided in the distal end of each arm member 10, 10'. The removal members 8, 8' have a, basically, semi-circular cross-section and are configured to allow easy access for removal of the fixing device 2, when the fixing device 2 is attached in a groove or a slot (see Fig. 9B).

Fig. 9B illustrates a schematic cross-sectional view of two fixing devices 2, 2' like the one shown in Fig. 9A attached to a groove. In Fig. 9B, each of the fixing devices 2, 2' are attached to the pipe 20 and the fixing devices 2, 2' are further fixed in the groove 24 of the building structure 22.

The protrusions 12, 12' are brought into contact with the side portions of the groove 24. The arm members 10, 10' have been forcedly bent towards the central portion of the fixing devices 2, 2' and thus the arm members 10, 10' exert a force towards the side portions of the groove 24 and the abutting arm members 10' 10". Accordingly, a normal force will be provided towards the side portions of the groove 24 and the abutting arm members 10', 10". Therefore, the fixing devices 2, 2' will be fixed to each other and to the side portions of the groove.

The height H of the fixing device 2 corresponds almost to the depth D of the groove 24. The depth D of the groove 24 is slightly larger than the height H of the fixing devices 2, 2'. Since the fixing devices 2, 2' are completely received by the groove 24 it is possible to temporarily fix the pipes 20 to the groove 24 and afterwards plaster the building structure 22.

The fixing devices 2 can be removed by pulling removal member 6 or by pressing the removal members 8, 8' toward each and hereby reducing the force exerted by the arm members 10, 10' towards the side portions of the groove 24 so that the fixing devices 2, 2' can be removed from the groove 24.

### List of reference numerals

- 2, 2': Fixing device
- 4: Body portion
- 6, 6': Removal member
- 8, 8': Removal member
- 10, 10': Arm member
- 12, 12': Protrusion
- 14: Reinforcement structure
- 16: Cavity
- 18, 18': Pointed portion
- 20: Pipe
- 22: Building structure
- 24: Groove
- 26: Direction
- 28: Hand tool (pliers)
- 30: Protrusion member
- 32: Groove member
- 34, 34', 36, 36': Plane section
- 38: Opening
- 40: Retainment member
- 42: Canal structure
- 44, 44': Cable
- α: Angle
- X: Longitudinal axis (X-axis)
- Y: Lateral axis (Y-axis)
- Z: Normal axis (Z-axis)
- W: Width
- H: Height
- L: Length
- D: Depth

## Claims

1. A fixing device (2, 2') for fixing a cable (44, 44'), pipe (20) or tube to a slot or a groove (24) having side portions, which fixing device (2, 2') comprises a body portion (4) provided with a cavity (16) for receiving at least one cable (44, 44'), pipe (20) or tube through an opening (38) in the body portion (4) in order to fix the cable (44, 44'), pipe (20) or tube to the fixing device (2, 2'), wherein the opening (38) faces the bottom of the slot or groove (24) and the fixing device (2,2') is completely received in the slot or groove (24) when the fixing device (2, 2') has been attached to the slot or groove (24), wherein the fixing device (2, 2') comprises one or more arm members (10, 10') attached to the body portion (4), wherein the one or more arm members (10, 10') are configured to be pressed towards the body portion (4) while inserting the fixing device (2, 2') to the slot or groove (24) and are configured to exert a force towards the side portions of the slot or groove (24) when the fixing device (2, 2') has been attached to the slot or groove (24),
**characterised in that**
the fixing device (2, 2') comprises one or more removal members (6, 6', 8, 8') of which at least one (8, 8') is provided at the distal end of at least one of the arm members (10, 10'), wherein at least one and preferably all of the one or more removal members (8, 8') are configured to be protruding from the side portions of the slot or groove whereby the removal members (8,8') are not in contact with the side portions of the slot or groove when the fixing device (2, 2') has been attached to the slot or groove (24) so to be accessible when the fixing device (2, 2') has been attached to the slot or groove (24), thereby enabling the at least one arm member (10, 10') with the removal member (8, 8') at its distal end, to be pressed towards the central portion of the fixing device in order to release the force exerted from the arm members towards the side portions of the slot or groove.

2. The fixing device (2) according to claim 1, wherein the one or more removal members (6, 6', 8, 8') protrude towards the opening of the slot or groove (24) when the fixing device (2, 2') has been attached to the slot or groove (24).

3. The fixing device (2) according to claim 1 or 2, wherein the cross-section of the body portion (4) is basically C-shaped with said opening (38) forming the opening in the 'C'.

4. The fixing device (2) according to any of the preceding claims, wherein said arm members (10, 10') are attached to said body portion (4) in an area of said opening (38).

5. The fixing device (2) according to any of the preceding claims, wherein at least one of the one or more removal members (6, 6', 8, 8') extends along the length of the fixing device (2, 2').

6. The fixing device (2) according to any of the preceding claims, wherein the at least one (8, 8') of the one or more removal members (6, 6', 8, 8') being provided at the distal end of at least one of the arm members (10, 10') has a basically semi-circular cross-section and is configured to allow easy access for removal of the fixing device (2, 2'), when the fixing device (2, 2') is attached in the slot or groove (24).

7. The fixing device (2) according to any of the preceding claims, wherein at least one (6,6') of the one or more removal members (6, 6', 8, 8') is extending radially from the body portion at a central position thereof and has a plate-shaped geometry making it easy to grip it with a hand tool in order to replace or remove the fixing device (2, 2').

8. The fixing device (2) according to any of the preceding claims, wherein the body portion (4) comprises a C-shaped "arm member-free" portion to which no arm members (10, 10') are attached, and the angle (α) of the C-shaped "arm member-free" portion exceeds 180 degrees to at least partially enclose said cavity arranged to receive a cable (44, 44'), pipe (20) or tube.

9. The fixing device (2) according to any of the preceding claims, wherein the arm members (10, 10') are provided with protrusions (12, 12') configured to engage said side portions to facilitate fixation of the fixing device (2, 2') in the slot or groove (24).

10. The fixing device (2) according to any of the preceding claims, wherein the fixing device (2, 2') comprises a first pointed portion (18) and a second pointed portion (18') extending in extension of the body portion (4) and the arm members (10, 10'), wherein the first pointed portion (18) comprises a first plane section (34), wherein the second pointed portion (18') comprises a first plane section (34'), wherein the opening (38) is provided between the first pointed portion (18) and the second pointed portion (18').

11. The fixing device (2) according to any of the preceding claims, wherein the fixing device comprises attachment members (12, 12', 30, 32) for coupling with a second fixing device (2').

12. The fixing device (2) according to any of the preceding claims, wherein the fixing device comprises retainment members (40) forming a plurality of canal structures (42) each configured to receive and retain a cable (44, 44'), pipe (20) or tube.

13. The fixing device (2) according to any of the preceding claims, wherein a largest cross-sectional dimension of said cavity (16) or canal structure (42) is in the range of 1mm to 1m, preferably between 5mm and 300mm, more preferably between 8mm and 50mm, for example 11mm, 13mm, 15mm, 16mm, 18mm, 32mm, 40mm or 50mm.

## Patentansprüche

1. Fixierungsvorrichtung (2, 2') zum Fixieren eines Kabels (44, 44'), einer Leitung (20) oder eines Rohrs in einer Aussparung oder einem Schlitz (24) mit Seitenabschnitten, wobei die Fixierungsvorrichtung (2, 2') einen Hauptteil (4) umfasst, der mit einer Aushöhlung (16) ausgestattet ist, um wenigstens ein Kabel (44, 44'), eine Leitung (20) oder ein Rohr durch eine Öffnung (38) im Hauptteil (4) aufzunehmen und um dadurch das Kabel (44, 44'), die Leitung (20) oder das Rohr in der Fixierungsvorrichtung (2, 2') zu fixieren, wobei die Öffnung (38) dem Boden der Aussparung oder des Schlitzes (24) gegenüberliegt und die Fixierungsvorrichtung (2, 2') vollständig in der Aussparung oder dem Schlitz (24) aufgenommen wird, wenn die Fixierungsvorrichtung (2, 2') in die Aussparung oder den Schlitz (24) eingebaut wurde, wobei die Fixierungsvorrichtung (2, 2') ein oder mehrere Armelemente (10, 10') umfasst, die am Hauptteil (4) befestigt sind, wobei das eine oder die mehreren Armelemente (10, 10') dafür eingerichtet sind, in Richtung des Hauptteils (4) gepresst zu werden, während die Fixierungsvorrichtung (2, 2') in die Aussparung oder den Schlitz (24) eingeführt wird, und dafür eingerichtet sind, eine Kraft in Richtung der Seitenabschnitte der Aussparung oder des Schlitzes (24) auszuüben, wenn die Fixierungsvorrichtung (2, 2') in die Aussparung oder den Schlitz (24) eingebaut wurde,
**dadurch gekennzeichnet, dass**
die Fixierungsvorrichtung (2, 2') ein oder mehrere Entfernungselemente (6, 6', 8, 8') umfasst, von denen wenigstens eines (8, 8') am außen liegenden Ende wenigstens eines der Armelemente (10, 10') vorgesehen ist, wobei wenigstens eines und vorzugsweise alle von dem einen oder den mehreren Entfernungselementen (8, 8') dafür eingerichtet sind, von den Seitenabschnitten der Aussparung oder des Schlitzes abzustehen, wobei die Entfernungselemente (8, 8') nicht mit den Seitenabschnitten der Aussparung oder des Schlitzes in Kontakt sind, wenn die Fixierungsvorrichtung (2, 2') in die Aussparung oder den Schlitz (24) eingebaut wurde, um dadurch zugänglich zu sein, wenn die Fixierungsvorrichtung (2, 2') in die Aussparung oder den Schlitz (24) eingebaut wurde, wodurch das wenigstens eine Armelement (10, 10') mit dem Entfernungselement (8, 8') an seinem außen liegenden Ende dafür eingerichtet ist, in Richtung des zentralen Abschnitts der Fixierungsvorrichtung gedrückt zu werden, um dadurch die Kraft aufzuheben, die von den Armelementen in Richtung der Seitenabschnitte der Aussparung oder des Schlitzes ausgeübt wird.

2. Fixierungsvorrichtung (2) nach Anspruch 1, wobei das eine oder die mehreren Entfernungselemente (6, 6', 8, 8') in Richtung der Öffnung der Aussparung oder des Schlitzes (24) hervorstehen, wenn die Fixierungsvorrichtung (2, 2') in die Aussparung oder den Schlitz (24) eingebaut wurde.

3. Fixierungsvorrichtung (2) nach Anspruch 1 oder 2, wobei der Querschnitt des Hauptteils (4) im Wesentlichen C-förmig ist, wobei die Öffnung (38) die Öffnung des 'C' bildet.

4. Fixierungsvorrichtung (2) nach einem der vorhergehenden Ansprüche, wobei die Armelemente (10, 10') am Hauptteil (4) in einem Bereich der Öffnung (38) befestigt sind.

5. Fixierungsvorrichtung (2) nach einem der vorhergehenden Ansprüche, wobei wenigstens eines von dem einen oder den mehreren Entfernungselemente (6, 6', 8, 8') sich entlang der Länge der Fixierungsvorrichtung (2, 2') erstreckt.

6. Fixierungsvorrichtung (2) nach einem der vorhergehenden Ansprüche, wobei das wenigstens eine (8, 8') von dem einen oder den mehreren Entfernungselemente (6, 6', 8, 8'), das am außen liegenden Ende wenigstens eines der Armelemente (10, 10') vorgesehen ist, einen im Wesentlichen halbkreisförmigen Querschnitt hat und dafür eingerichtet ist, einen leichten Zugang zum Entfernen der Fixierungsvorrichtung (2, 2') zu gestatten, wenn die Fixierungsvorrichtung (2, 2') in der Aussparung oder dem Schlitz (24) eingebaut ist.

7. Fixierungsvorrichtung (2) nach einem der vorhergehenden Ansprüche, wobei wenigstens eines (6, 6') von dem einen oder den mehreren Entfernungselemente (6, 6', 8, 8') sich radial vom Hauptteil, ausgehend von einer mittigen Stelle von diesem, erstreckt und eine plattenförmige Gestalt hat, wodurch es einfach ist, es mit einem Handwerkzeug zu greifen, um die Fixierungsvorrichtung (2, 2') zu ersetzen oder zu entfernen.

8. Fixierungsvorrichtung (2) nach einem der vorhergehenden Ansprüche, wobei der Hauptteil (4) einen C-förmigen "armelement-freien" Abschnitt umfasst, an dem keine Armelemente (10, 10') befestigt sind, und wobei der Winkel (α) des C-förmigen "armelement-freien" Abschnitts 180 Grad übersteigt, um die Aushöhlung, die dafür eingerichtet ist, ein Kabel (44, 44'), eine Leitung (20) oder ein Rohr aufzunehmen, wenigstens teilweise zu umschließen.

9. Fixierungsvorrichtung (2) nach einem der vorhergehenden Ansprüche, wobei die Armelemente (10, 10') mit Vorsprüngen (12, 12') ausgestattet sind, die dafür eingerichtet sind, mit den Seitenabschnitten in Kontakt zu sein, um die Fixierung der Fixierungsvorrichtung (2, 2') in der Aussparung oder dem Schlitz (24) zu unterstützen.

10. Fixierungsvorrichtung (2) nach einem der vorhergehenden Ansprüche, wobei die Fixierungsvorrichtung (2, 2') einen ersten spitz zulaufenden Abschnitt (18) und einen zweiten spitz zulaufenden Abschnitt (18') umfasst, die sich in Verlängerung des Hauptteils (4) und der Armelemente (10, 10') erstrecken, wobei der erste spitz zulaufende Abschnitt (18) einen ersten flachen Teil (34) umfasst, wobei der zweite spitz zulaufende Abschnitt (18') einen ersten flachen Teil (34') umfasst und wobei die Öffnung (38) zwischen dem ersten spitz zulaufenden Abschnitt (18) und dem zweiten spitz zulaufenden Abschnitt (18') vorgesehen ist.

11. Fixierungsvorrichtung (2) nach einem der vorhergehenden Ansprüche, wobei die Fixierungsvorrichtung Anschlusselemente (12, 12', 30, 32) zur Kopplung mit einer zweiten Fixierungsvorrichtung (2') umfasst.

12. Fixierungsvorrichtung (2) nach einem der vorhergehenden Ansprüche, wobei die Fixierungsvorrichtung Halteelemente (40) umfasst, die mehrere Kanalstrukturen (42) ausbilden, von denen jede dafür eingerichtet ist, ein Kabel (44, 44'), eine Leitung (20) oder ein Rohr aufzunehmen und zu halten.

13. Fixierungsvorrichtung (2) nach einem der vorhergehenden Ansprüche, wobei eine größte Querschnittabmessung der Aushöhlung (16) oder Kanalstruktur (42) im Bereich von 1 mm bis 1 m liegt, vorzugsweise zwischen 5 mm und 300 mm und noch bevorzugter zwischen 8 mm und 50 mm, wie beispielsweise 11 mm, 13 mm, 15 mm, 16 mm, 18 mm, 32 mm 40 mm oder 50 mm.

## Revendications

1. Dispositif de fixation (2, 2') pour la fixation d'un câble (44, 44'), tuyau (20) ou tube à une fente ou une rainure (24) présentant des portions latérales, lequel dispositif de fixation (2, 2') comprend une portion de corps (4) dotée d'une cavité (16) pour la réception d'au moins un câble (44, 44'), tuyau (20) ou tube au travers d'une ouverture (38) dans la portion de corps (4) afin de fixer le câble (44, 44'), tuyau (20) ou tube au dispositif de fixation (2, 2'), dans lequel l'ouverture (38) fait face au fond de la fente ou rainure (24) et le dispositif de fixation (2, 2') est complètement reçu dans la fente ou rainure (24) lorsque le dispositif de fixation (2, 2') a été attaché à la fente ou rainure (24), dans lequel le dispositif de fixation (2, 2') comprend un ou plusieurs éléments de bras (10, 10') attachés à la portion de corps (4), dans lequel les un ou plusieurs éléments de bras (10, 10') sont configurés pour être pressés vers la portion de corps (4) tout en insérant le dispositif de fixation (2, 2') dans la fente ou rainure (24) et sont configurés pour exercer une force vers les portions latérales de la fente ou rainure (24) lorsque le dispositif de fixation (2, 2') a été attaché à la fente ou rainure (24),
**caractérisé en ce que**
le dispositif de fixation (2, 2') comprend un ou plusieurs éléments de retrait (6, 6', 8, 8') dont au moins un (8, 8') est prévu sur l'extrémité distale d'au moins un des éléments de bras (10, 10'), dans lequel au moins un et de préférence tous des un ou plusieurs éléments de retrait (8, 8') sont configurés pour être en saillie des portions latérales de la fente ou rainure, moyennant quoi les éléments de retrait (8, 8') ne sont pas en contact avec les portions latérales de la fente ou rainure lorsque le dispositif de fixation (2, 2') a été attaché à la fente ou rainure (24) de sorte à être accessible lorsque le dispositif de fixation (2, 2') a été attaché à la fente ou rainure (24), permettant ainsi à l'au moins un élément de bras (10, 10') avec l'élément de retrait (8, 8') sur son extrémité distale, d'être pressé vers la portion centrale du dispositif de fixation afin de libérer la force exercée des éléments de bras vers les portions latérales de la fente ou rainure.

2. Dispositif de fixation (2) selon la revendication 1, dans lequel les un ou plusieurs éléments de retrait (6, 6', 8, 8') font saillie vers l'ouverture de la fente ou rainure (24) lorsque le dispositif de fixation (2, 2') a été attaché à la fente ou rainure (24).

3. Dispositif de fixation (2) selon la revendication 1 ou 2, dans lequel la section transversale de la portion de corps (4) est fondamentalement en forme de C avec ladite ouverture (38) formant l'ouverture dans le 'C'.

4. Dispositif de fixation (2) selon l'une quelconque des revendications précédentes, dans lequel lesdits éléments de bras (10, 10') sont attachés à ladite portion de corps (4) dans une zone de ladite ouverture (38).

5. Dispositif de fixation (2) selon l'une quelconque des revendications précédentes, dans lequel au moins un des un ou plusieurs éléments de retrait (6, 6', 8, 8') s'étend le long de la longueur du dispositif de fixation (2, 2').

6. Dispositif de fixation (2) selon l'une quelconque des revendications précédentes, dans lequel l'au moins un (8, 8') des un ou plusieurs éléments de retrait (6, 6', 8, 8') étant prévu sur l'extrémité distale d'au moins un des éléments de bras (10, 10') présente une section circulaire fondamentalement semi-circulaire et est configuré pour permettre un accès facile pour le retrait du dispositif de fixation (2, 2') lorsque le dispositif de fixation (2, 2') est attaché dans la fente ou rainure (24).

7. Dispositif de fixation (2) selon l'une quelconque des revendications précédentes, dans lequel au moins un (6, 6') des un ou plusieurs éléments de retrait (6, 6', 8, 8') s'étend radialement depuis la portion de corps sur une position centrale de celle-ci et présente une géométrie en forme de plaque facilitant sa saisie avec un outil manuel afin de remplacer ou retirer le dispositif de fixation (2, 2').

8. Dispositif de fixation (2) selon l'une quelconque des revendications précédentes, dans lequel la portion de corps (4) comprend une portion « sans élément de bras » en forme de C à laquelle aucun élément de bras (10, 10') n'est attaché, et l'angle (α) de la portion « sans élément de bras » en forme de C excède 180 degrés pour enfermer au moins partiellement ladite cavité agencée pour recevoir un câble (44, 44'), tuyau (20) ou tube.

9. Dispositif de fixation (2) selon l'une quelconque des revendications précédentes, dans lequel les éléments de bras (10, 10') sont dotés de saillies (12, 12') configurées pour venir en prise avec lesdites portions latérales afin de faciliter la fixation du dispositif de fixation (2, 2') dans la fente ou rainure (24).

10. Dispositif de fixation (2) selon l'une quelconque des revendications précédentes, dans lequel le dispositif de fixation (2, 2') comprend une première portion pointue (18) et une seconde portion pointue (18') s'étendant en extension de la portion de corps (4) et des éléments de bras (10, 10'), dans lequel la première portion pointue (18) comprend une première section plane (34), dans lequel la seconde portion pointue (18') comprend une première section plane (34'), dans lequel l'ouverture (38) est prévue entre la première portion pointue (18) et la seconde portion pointue (18').

11. Dispositif de fixation (2) selon l'une quelconque des revendications précédentes, dans lequel le dispositif de fixation comprend des éléments d'attache (12, 12', 30, 32) pour le couplage avec un second dispositif de fixation (2').

12. Dispositif de fixation (2) selon l'une quelconque des revendications précédentes, dans lequel le dispositif de fixation comprend des éléments de retenue (40) formant une pluralité de structures de canal (42) configurées chacune pour recevoir et retenir un câble (44, 44'), tuyau (20) ou tube.

13. Dispositif de fixation (2) selon l'une quelconque des revendications précédentes, dans lequel une dimension de section transversale la plus grande de ladite cavité (16) ou structure de canal (42) est dans la plage de 1 mm à 1 m, de préférence entre 5 mm et 300 mm, de manière davantage préférée entre 8 mm et 50 mm, par exemple 11 mm, 13 mm, 15 mm, 16 mm, 18 mm, 32 mm, 40 mm ou 50 mm.
